# EUROPEAN PATENT SPECIFICATION

(11) **EP 1 761 198 B1**
(45) Date of publication and mention of the grant of the patent: **07.09.2011**
(21) Application number: 05739452.0
(22) Date of filing: 26.05.2005
(51) Int. Cl.: A61C 13/08, A61C 19/10, A61C 13/38

(54) **ARRANGEMENT OF CONTAINERS CONTAINING SUBSTANCES FOR A DENTAL CERAMIC PRODUCT**
ANORDNUNG VON BEHÄLTERN MIT SUBSTANZEN FÜR EIN DENTALES KERAMIKPRODUKT
ARRANGEMENT DE CONTENANTS QUI CONTIENNENT DES MATIERES PERMETTANT LA PREPARATION D'UN PRODUIT CERAMIQUE DENTAIRE

(30) Priority: 26.05.2004 SE 0401357
(43) Date of publication of application: 14.03.2007
(73) Proprietor: Nobel Biocare Services AG, Zürich-Flughafen (CH)
(72) Inventor: HEGENBARTH, Ernst, 63543 Neuberg (DE)
(74) Representative: Davies, Dominic Jack
(86) International application number: PCT/IB2005/001447
(87) International publication number: WO 2005/115269

(56) References cited:
- DE-U1- 29 804 505
- US-A- 3 452 880
- US-A- 4 700 850
- US-A- 4 828 117
- US-A- 5 199 567

## Description

The present invention relates to an arrangement of bottle-shaped containers containing various substances for the construction and coloring of dental products, for example in the form of front teeth. The invention can also apply to other types of products, for example caps and spacer sleeves. The products/teeth can be made of aluminum oxide, titanium oxide, zirconium oxide, etc.

It is already known to arrange substances for construction and coloring of dental ceramic teeth any products of said type in box-shaped units that can be opened and closed and in which, when the box or the like is in the open position, various containers, tubes or tins, instruments, etc., can be exposed and selected from by a user. Reference may be made in this connection to US patent specifications 5,261,815 and 5,588,834.

An arrangement of bottle-shaped containers according to the preamble of claim 1 is known from US 4 828 117.

There is a need to offer an arrangement with better presentation and enhanced user-friendliness of the substances in question and of their different shades. Among other things, there is a need for new esthetically pleasing concepts and variations in the type of work in question here. An aim is to initiate new ideas in connection with use, training, customer service, communication between manufacturer and user, and problems connected with the construction and coloring of the teeth or products. Among other things, the use of the arrangement should be developed so that, for example, individuals with different backgrounds and different levels of knowledge of the construction or the product can use the arrangement at the same time. Despite the above requirements, another aim is to ensure simplified handling in connection with the product constructions according to the above. New substances and components arising in this field must be able to be incorporated into the arrangement. An important requirement of the invention is to permit production of, inter alia, ceramic teeth with a natural appearance through using color harmonies and color shades in connection with production. It is an object of the present invention to solve all or some of the problems indicated above.

That which can principally be regarded as characterizing an arrangement according to the invention is that the bottle-shaped containers are arranged in sector-shaped units which each comprise containers with substances belonging to an allocated group or shades which differs from another group or other groups of shades. The arrangement is additionally characterized in that the containers/substances included in each respective group are divided into user categories, for example categories called Basic Kit, Professional Kit and Stain Kit. The arrangement is additionally characterized in that the containers/ substances related to a first use are placed outermost in the sector-shaped unit in question, a second user category is placed to the inside of the first user category in the sector-shaped unit, and so on.

The sector-shaped units can form part of a cone-shaped or pyramid-shaped unit or of a cone-shaped unit with straight side surfaces in a number which differs from the pyramid-shaped unit. Moreover, the outermost containers can be arranged around the unit at a first level. To the inside of the outermost containers, other containers can be arranged around the unit at a second level, and so on. Alternatively, the sector-shaped units can be arranged in a common plane in wich every second sector-shaped unit is directed such that the unit as a whole forms a rectangle or square. In an alternative embodiment, the unit can be designed to hang on a wall or similar.

In a further embodiment, each sector-shaped unit can be divided in its longitudinal direction into two or more arc-shaped unit parts which are mutually rotatable about a center axis in the cone-shaped or pyramid-shaped unit so that, in a first position of rotation, the arc-shaped unit parts form the sector shape and, in one or more other positions of rotation, the various arc-shaped unit parts assume laterally offset positions in relation to one another. In the laterally offset positions of the first arc-shaped unit parts, the other arc-shaped unit parts in all the sector-shaped units can be rotated jointly, in which case the containers/substances for the respective user category are arranged to be rotatable in relation to the containers/substances for another user category or other user categories. The cone-shaped or pyramid-shaped unit can thus comprise or be made up of one, two or more ring-shaped elements which are designed to be rotatable relative to one another. Each ring-shaped element consists of arc-shaped sector parts belonging to a user category which differs from the other user category or user categories, meaning that said adjustability for different users can be achieved. In a preferred embodiment, the level differences between the various rows of containers arranged around the cone-shaped or pyramid-shaped unit are designed to provide exposable surfaces on the containers, which surfaces can support identifiable markings for each substance in the containers, so that the shade in question can be easily identified. In a further embodiment, the containers/substances in each sector-shaped unit are arranged in subsectors which extend alongside one another. One or more containers/substances for a first group of shades in one or more of the sector-shaped unit's user categories can be coordinated with containers/substances in an adjacent group of shades and user category. In one embodiment, the cone-shaped or pyramid-shaped unit is provided with a centrally arranged element which supports a chart or samples of shades of substances used for construction and coloring. The element can be removed from the cone-shaped or pyramid-shaped unit and can be made up of disks or plates comprising sector-shaped parts which can be removed from and fixed to the element. Further embodiments of the novel arrangement are evident from the attached dependent claims.

By means of what is proposed above, a new approach is obtained to the existing substances, and to those under constant development, for creating ceramic products with a natural appearance. These can be created on the basis of experience, research, logic and creativity. All standard colors can be produced with the predicted results. Only a small number of groups of colors, for example six, need to be used to give a youthful dental look. The arrangement functions with external and internal concepts, the internal concepts permitting professional modifications for an almost unlimited number of variations.

A presently proposed arrangement having the features characteristic of the invention is described below with reference to the attached drawings, in which
- Figure 1: is a perspective view, obliquely from above, showing an arrangement which comprises a cone-shaped unit on which a number of bottle-shaped units have been arranged in various circular rows and at different levels,
- Figure 2: is a perspective view, obliquely from above, showing an example of the design of a bottle-shaped container according to Figure 1,
- Figure 3: is a perspective view, obliquely from above, showing inner parts of the element according to Figure 1, which inner parts support templates or samples in tablet form for different shades used in or on the cone-shaped unit according to Figure 1,
- Figure 4: is a perspective view, obliquely from above, showing a disk-shaped part which is included in the inner parts according to Figure 3 and which is provided with or comprises sector-shaped disk parts,
- Figure 5 is a: perspective view, obliquely from above, showing a bearing element for the element according to Figure 3,
- Figure 6: is a diagram showing different color shades and user categories, and
- Figure 7: is a diagram showing a sector-shaped unit included in the arrangement according to Figure 6.

Reference is also made to the appended table which shows, on the one hand, different user categories and, on the other hand, different shades which are related to the invention.

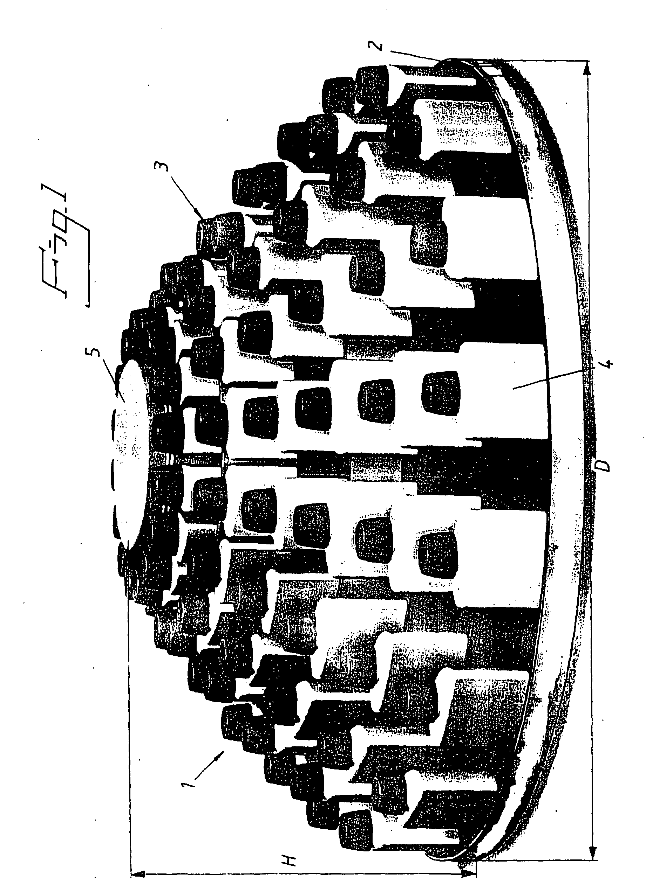

The cone-shaped unit according to Figure 1 is indicated generally by 1. The unit has a width or diameter D of 420-500 mm, preferably ca. 460 mm. The unit also has a height H of 140-200 mm, preferably ca. 160 mm. The unit 1 comprises a plate 2 on which a number of containers 3 are disposed in circular rows at different levels. Thus, the containers in the outer circular row are located at a lowest or first level, the containers in the row next to the outermost row are located at a second level, and so on. In this way, sides 4 of the containers are exposed to an observer. The exposed sides can bear identifications for the substances the sides can bear identifications for the substances the containers contain. By means of the various levels, the identifications can be easily read off by an observer or user. The various levels can be produced with the aid of shelves arranged on the container 2. Thus, the second row of containers can be set on a circle-shaped shelf with a support surface for the containers which lies higher than the support surface for the containers in the outermost row. The third circular row can be disposed on another circle-shaped shelf whose support surface is arranged at a higher level than the circle-shaped shelf for the second outermost row, and so on. In accordance with the description below, the containers are also arranged on sector-shaped parts. The shelves supporting the containers at different levels can be mutually rotated so that one group of containers in the sector-shaped unit can be observed from one direction and a second group of containers in the sector-shaped unit can be observed from another direction. In this way, the containers can be used at the same time by two or more users.

At its central parts, the cone-shaped unit 1 is provided with an element which is shown in a position lowered into the unit 1. The element can be drawn up out of the unit 1 and, in accordance with what is described below, can have a chart, or samples in tablet shape form, of the shades present in the arrangement. The chart or the tablet-shaped samples can be compared with the markings or identifications on the bottle-shaped containers upon use of the containers and substances.

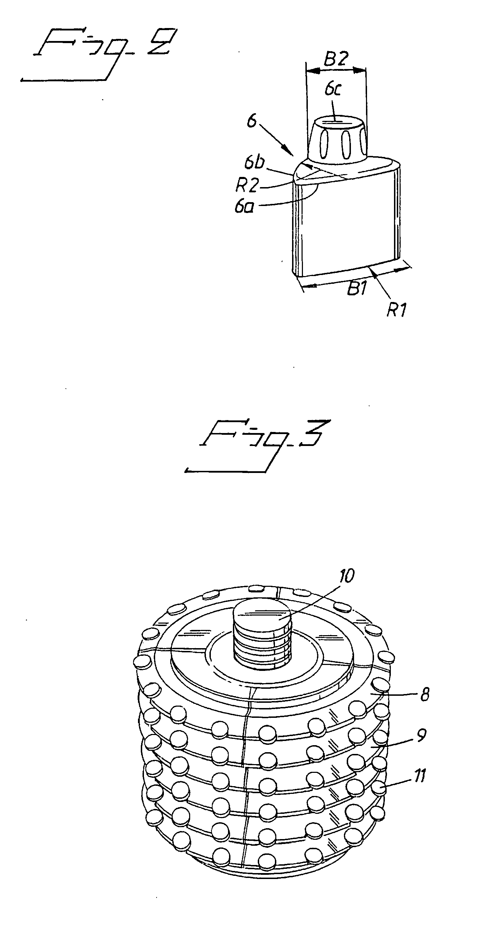

Figure 2 shows the design of a bottle-shaped container indicated by 6. The outer side of the container is indicated by 6a and the inner side of the container is indicated by 6b. A radius R1 for the outer side exceeds a radius R2 for the inner side. A closure, for example a cap, is indicated by 6c. The container can be held with the slightly bent fingers and palm of one hand, in which case the inner side 6b fits the "cup shape" of the hand. At the same time, the container can be held in the hand in such a way that the closure 6c can be acted on by the thumb and index finger of the hand. The container according to Figure 2 has a width B1 in the range of 35-50 mm, preferably the width in two different variants can be ca. 38 mm or ca. 49 mm. The closure 6c has a diameter in the range of 10-20 mm, preferably ca. 15 mm.

The element 5 according to Figure 1 comprises a casing 7. The element as a whole can be removed from the unit 1 according to Figure 1. According to Figure 3, where the casing has been removed, the inner parts of the element consist of a number of disk-shaped or plate-shaped elements, of which two have been labeled in Figure 3. The disks are mounted on a bearing element 10 and, at their peripheries, the disks or plates support tablet-shaped markings which represent the different shades. In the removed state shown in Figure 3, the various tabelt-shaped identifications can be compared with the identifications on the container of the unit 1 (see Figure 1). The disks or plates can be rotated relative to one another.

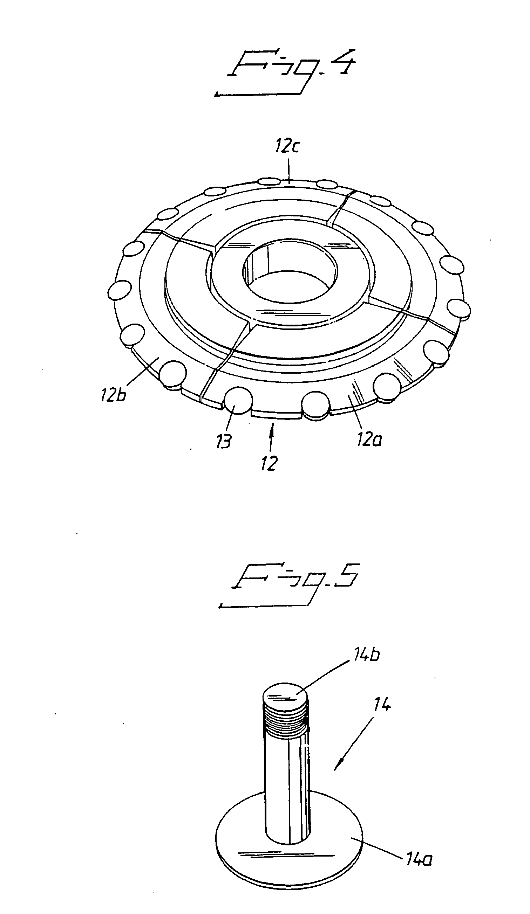

Figure 4 shows a plate 12 in the arrangement according to Figure 3. A comparison is made between its tablet-shaped markings and the conceived dental product with respect to color scale.

Figure 5 shows a bearing element 14 for said disks or plates. The bearing elements comprise a base part 14a and a cylindrical bearing shaft 14b for the disks/plates.

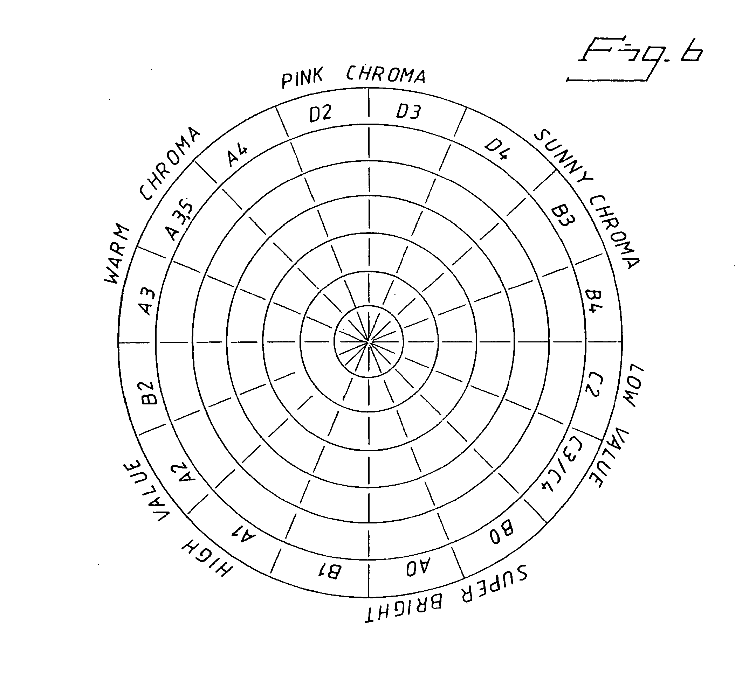

In accordance with Figure 6, the containers 3 according to Figure 1 are arranged in sector-shaped parts, which are six in number in the illustrative embodiment. The sector-shaped parts are called SUPER BRIGHT, HIGH VALUE, WARM CHROMA, PEARL CHROMA, SUNNY CHROMA and LOW VALUE.

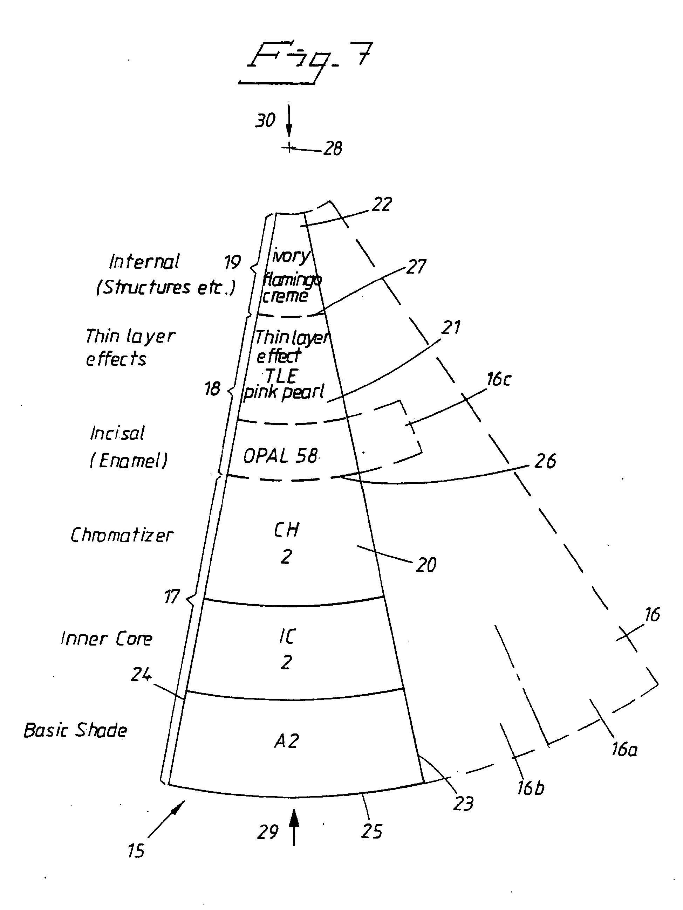

In accordance with Figure 7, the containers are arranged in sector-shaped parts, one sector-shaped part having been indicated by 15 and with solid lines, and another sector-shaped part having been indicated by 16 and broken lines. Each sector-shaped part is divided into user categories, a first user category having been indicated by 17, a second user category by 18, and a third user category by 19. Reference is also made to the appended table which lists a first user category as Basic Kit, Professional Kit and Stain Kit. The user categories can also be divided for straightforward or general use, moderately difficult use, and advanced use. The sector-shaped unit 8 is divided into arc-shaped sector parts 20, 21 and 22, in which each arc-shaped sector part is limited by the side surfaces 23, 24 of the sector unit and circle lines 25, 26 and 27 around the axis of rotation 28 of the sector unit 15, which axis of rotation is common with the center axis of the unit 1 (see Figure 1). In accordance with the invention, the arc-shaped sector parts 20, 21 and 22 can be mutually rotated. At least the sector part 21 is rotatable in relation to the sector part 20 and the sector part 22 is rotatable in relation to the sector part 21. Containers in, for example, sector part 20 can be viewed from one direction of observation symbolized by 29 in Figure 8. In the laterally offset positions of the sector parts 21 and/or 22, the containers in each sector part can be viewed from another direction 30 which is different than the direction of observation 29. In this way, different users can use the arrangement at the same time. Each sector, for example sector 16, can be considered as comprising two or more subsector units 16a, 16b which support containers arranged alongside one another in the circular row or rows in question. By means of this arrangement, shades which belong in principle to an adjacent shade group can be related to the shades in the shade group placed alongside. This needs to be the case only in one of the user categories 17, 18 and 19. In the case shown in Figure 8, containers 16c in sector part 16b are thus regarded as being able to be matched with containers in the same circular row in sector 15, and so on.

The element 5 in the unit 1 can be of telescopic design. Likewise, the unit 1 according to Figure 1 can be collapsible so that a lower value is obtained for the height H. The tablets can have diameters of 6 mm and thicknesses of 2 mm. The disks or plates can be provided with arrangements allowing the tablets to be easily pressed into a recess or removed therefrom. The element 5 can be arranged so as to be rotatable in its bearing according to Figure 6. Reference is made to the appended table in which the circular rows in the first category comprise Dentines, 6 Liners, 6 Inner Cores, 4 Chromatizers and 8 Opal, Enamels, 6 Standard Incisals, Transpa Clear and Occlusal White. Examples of the various shades are shown in the table.

The table also shows that Professional Kit comprises Internal Modifiers, Colored Translucencies, Mother-of-pearl effects, Shoulder Ceramics and Liner Modifiers. The arrangement with Stain Kit comprises Stain Powders, Glaze Powder and Correction Powder.

The invention is not limited to the embodiment shown above by way of example, and instead it can be modified within the scope of the attached patent claims.

**TABLE**

| | | |
|---|---|---|
| 1. Basic Kit (48 botttles 20 g) | | |
| | | |
| 1st Circle: 16 Dentines | | |
| | | |
| Superbright: | B0 A0 | |
| High Value: | B1, A1, A2 | |
| Warm Chroma: | A3, A3, 5, A4 | |
| Pink Chroma: | D2, D3 | |
| Sunny Chroma: | B2,B3, B4 | |
| Low Value: | C1, C2, C3,5 | |
| | | |
| 2nd Circle: 6 Liners, 6 Inner Cores (IC), 4 Chromatizers | | |
| | | |
| 6 Liners | 6 Inner Cores | 4 Chromatizers |
| Superbright | IC Superbright | - |
| High Value | IC High Value | - |
| Warm Chroma | IC Warm Chroma | Warm Chroma |
| Pink Chroma | IC Sunny Chroma | Pink Chroma |
| Sunny Chroma | IC Orange Chroma | Sunny Chroma |
| Low value | IC Low Value | Low Value |
| | | |
| 3rd Circle: 8 Opal Enamels, 6 Standard Incisals, Transpa Clear, Occlusal White | | |
| | | |
| Prof essional-Kit (32 bottles, 12 g) | | |
| | | |
| 10 International Modifiers | | |
| | | |
| Ivory, Flamingo, Crème, Bamboo, Solaris, Safari, Caramel, Amber, Pearl, Strato | | |
| | | |
| 6 Colored Translucencies | | |
| 4 "Mother-of-pearl" effects | | |
| 6 Shoulder ceramics | | |
| | | |
| 6 Liner Modifiers | | |
| | | |
| Liner High Flu (White) | | |
| Liner Pink | | |
| Liner Crème | | |
| Liners Sunny | | |
| Liner Orange | | |
| Liner Gray-Violet | | |
| | | |
| Stain Kit (16 Bottles, 3g) | | |
| | | |
| 14 Stain Powders | | |
| 1 Glaze Powder (glossy pearl) | | |
| 1 Correction Powder | | |

## Claims

1. An arrangement of bottle-shaped containers (3) containing various substances for construction and coloring of dental products, for example ceramic teeth, **characterized in that** the arrangement comprises sector-shaped units (15, 16) and **in that** the bottle-shaped containers are placed into said sector-shaped units (15, 16) which each comprise containers with substances belonging to an allocated group of shades, for example Super Bright, which differs from another group or other groups of shades, for example High Value, Warm Chroma, **in that** the containers/substances included in each respective group are divided into user categories (17, 18, 19), for example Basic Kit, Professional Kit and Stain Kit, and **in that** the containers/substances related to a first use are placed outermost in the sector-shaped unit in question, a second user category is placed to the inside of the first user category in the sector-shaped unit, and so on.

2. The arrangement as claimed in claim 1, **characterized in that** the sector-shaped units (15, 16) are designed to form part of a cone-shaped or pyramid-shaped unit (1) with the outermost containers arranged around the unit at a first level, with containers placed to the inside of the outermost containers and arranged around the unit at a second, higher level than the first level, and so on.

3. The arrangement as claimed in claim 2, **characterized in that** each sector-shaped unit (15) is divided in its longitudinal direction into two or more arc-shaped unit parts (20, 21, 22) which are mutually rotatable about a center axis (28) in the cone-shaped or pyramid-shaped unit (1) so that, in a first position of rotation, the arc-shaped unit parts form the sector shape and, in one or more other positions of rotation, the various arc-shaped unit parts assume laterally offset positions in relation to one another, and **in that**, in the laterally displaced positions of first arc-shaped unit parts, the other arc-shaped unit parts in all the sector-shaped units can be rotated jointly, in which case the containers/ substances for a respective user category (17, 18, 19) are arranged to be rotatable in relation to the containers/substances for another user category or other user categories.

4. The arrangement as claimed in claim 2, **characterized in that** the cone-shaped or pyramid-shaped unit (1) comprises or is made up of one, two or more ring-shaped elements which are designed to be rotatable relative to one another, **in that** each ring-shaped element consists of arc-shaped sector parts belonging to a user category which differs from the other user category or user categories, and the containers/substances for different user categories are rotatably adjustable from different directions of observation seen from the cone-shaped or pyramid-shaped unit.

5. The arrangement as claimed in any of claims 1-4, **characterized in that** the level differences between the various rows of containers arranged around the unit are designed to provide exposable surfaces (4) on the containers, which surfaces bear identification markings for each substance in the containers.

6. The arrangement as claimed in any of claims 1-5, **characterized in that** the containers/ substances in each sector-shaped unit (16) are arranged in subsectors (16a, 16b) which extend alongside one another, and **in that** one or more containers/substances for a first group of shades and in one or more of the sector-shaped unit's user categories are coordinated with containers/ substances in an adjacent group of shades and user category.

7. The arrangement as claimed in any of claims 1-6, **characterized in that** the cone-shaped or pyramid-shaped unit (1) for the first user category is arranged with
a) an outermost circle or first level of containers/substances numbering forty-eight, for example, and allocated to, for example, sixteen dentines,
b) a next outermost row or second level of containers/substances with sixteen liners for example, six inner cores (IC) for example, and four chromatizers for example, and
c) a third outermost row or third level comprising eight opal enamels for example, and six standard incisals, transpa clear and occlusal white.

8. The arrangement as claimed in any of claims 1-7, **characterized in that** the second user category comprises, for example, thirty-two containers/substances in different rows and consisting of ten internal modifiers for example, six colored translucencies for example, four mother-of-pearl effects for example, six shoulder ceramics for example, and six liner modifiers for example.

9. The arrangement as claimed in any of claims 1-8, **characterized in that** the third user category comprises, for example, sixteen containers/ substances in one or more rows at one or more levels and consisting of fourteen stain powders for example, one glaze powder for example, and one correction powder for example.

10. The arrangement as claimed in any of claims 1-9, **characterized in that** the cone-shaped or pyramid-shaped unit (1) has a width of 400-450 mm, preferably ca. 430 mm, and a height of 160-220 mm, preferably ca. 190 mm.

11. The arrangement as claimed in any of claims 1 - 10, **characterized in that** the cone-shaped or pyramid-shaped unit is provided with a centrally arranged element (5) which supports a chart or samples (13) of shades, used in association with the unit, of substances for construction and coloring.

12. The arrangement as claimed in claims 11, **characterized in that** the element (5) can be removed from the cone-shaped or pyramid-shaped unit (1) and supports the chart or samples on its side surfaces.

13. The arrangement as claimed in claim 11 or 12, **characterized in that** the element is arranged with telescopic parts which can be raised and lowered in relation to the cone-shaped or pyramid-shaped unit (1).

14. The arrangement as claimed in claim 11, 12 or 13, **characterized in that** the element is made up of disks or plates (8, 9) arranged one on top of the other and on which the chart samples or identifications are arranged, preferably at the peripheries of the disks or plates.

15. The arrangement as claimed in claim 14, **characterized in that** the disks or plates are sector-shaped and **in that** one or more, preferably all, of the sector-shaped parts (12a, 12b) can be removed from and fixed to the element.

16. The arrangement as claimed in any of claims 11-15, **characterized in that** the samples are tablet-shaped and preferably have a diameter of ca. 6 mm and a thickness of ca. 2 mm, and **in that** each tablet-shaped sample can be removed from and fixed to the sector part in question.

17. The arrangement as claimed in any of claims 11-16, **characterized in that** the element can be rotated on a bearing and is provided with a casing for covering the samples, for example during transportation and storage of the cone-shaped or pyramid-shaped unit.

18. The arrangement as claimed in any of claims 1-17, **characterized in that** each bottle-shaped container in cross section has curved outer sides and inner sides, **in that** the inner side has a considerably smaller radius than the outer side, and **in that** the inner side and closure can cooperate with the inner side of a slightly curved hand, and the closure is accessible to the thumb and index finger of the hand, and **in that** the container has a width of 35-50 mm, preferably ca. 38 mm in a first variant and ca. 49 mm in a second variant, and the closure has a diameter of 10-20 mm, preferably ca. 15 mm.

## Patentansprüche

1. Anordnung von flaschenförmigen Behältern (3), die verschiedene Substanzen zur Konstruktion und Färbung von Dentalprodukten, zum Beispiel keramischen Zähne enthalten, **dadurch gekennzeichnet, dass** die Anordnung sektorförmige Einheiten (15, 16) umfasst und dass die flaschenförmigen Behälter in den sektorförmigen Einheiten (15, 16) angeordnet sind, die jeweils Behälter mit Substanzen umfassen, die zu einer zugeordneten Gruppe von Farbtönen, zum Beispiel Superhell, gehören, die sich von einer anderen Gruppe oder anderen Gruppen von Farbtönen, zum Beispiel Hochwert, Warmchrominanz, unterscheidet, dass die Behälter/Substanzen, die in jeder jeweiligen Gruppe eingeschlossen sind, in Nutzerkategorien (17, 18, 19), zum Beispiel Basisset, professionelles Set und Färbeset, unterteilt sind und dass die Behälter/Substanzen, die eine erste Nutzung betreffen, in der betreffenden sektorförmigen Einheit am Äußersten angeordnet sind, eine zweite Nutzerkategorie zum Inneren der ersten Nutzerkategorie in der sektorförmigen Einheit angeordnet ist usw.

2. Anordnung gemäß Anspruch 1, **dadurch gekennzeichnet, dass** die sektorförmigen Einheiten (15, 16) ausgelegt sind, einen Teil einer konusförmigen oder pyramidenförmigen Einheit (1) zu bilden, wobei die äußersten Behälter um die Einheit herum auf einem ersten Niveau angeordnet sind, mit Behältern, die zu dem Inneren der äußersten Behälter angeordnet und um die Einheit herum auf einem zweiten, höheren Niveau als dem ersten Niveau angeordnet sind usw.

3. Anordnung gemäß Anspruch 2, **dadurch gekennzeichnet, dass** jede sektorförmige Einheit (15) in ihrer Längsrichtung in zwei oder mehr bogenförmige Einheitenteile (20, 21, 22) unterteilt ist, die wechselseitig um eine zentrale Achse (28) in der konusförmigen oder pyramidenförmigen Einheit (1) drehbar sind, so dass, in einer ersten Position der Drehung, die bogenförmigen Einheitenteile die Sektorform bilden und, in einer oder mehreren anderen Positionen der Drehung, die verschiedenen bogenförmigen Einheitenteile seitwärts versetzte Positionen in Bezug zueinander einnehmen und dass, in den seitwärts versetzten Positionen von ersten bogenförmigen Einheitenteilen, die anderen bogenförmigen Einheitenteile in allen sektorförmigen Einheiten gemeinsam gedreht werden können, in welchem Fall die Behälter/Substanzen für eine jeweilige Nutzerkategorie (17, 18, 19) so angeordnet sind, dass sie in Bezug auf die Behälter/Subtanzen für eine andere Nutzerkategorie oder andere Nutzerkategorien drehbar sind.

4. Anordnung gemäß Anspruch 2, **dadurch gekennzeichnet, dass** die konusförmige oder pyramidenförmige Einheit (1) eins, zwei oder mehr ringförmige Elemente umfasst oder aus diesen besteht, die entworfen sind, in Bezug aufeinander drehbar zu sein, dass jedes ringförmige Element aus bogenförmigen Sektorteilen besteht, die zu einer Nutzerkategorie gehören, die sich von der anderen Nutzerkategorie oder Nutzerkategorien unterscheidet, und dass die Behälter/Substanzen für unterschiedliche Nutzerkategorien drehbar einstellbar sind, aus unterschiedlichen Beobachtungsrichtungen gesehen von der konusförmigen oder pyramidenförmigen Einheit.

5. Anordnung gemäß einem der Ansprüche 1 bis 4, **dadurch gekennzeichnet, dass** die Niveaudifferenzen zwischen den unterschiedlichen Reihen von Behältern, die um die Einheit herum angeordnet sind, so ausgelegt sind, dass sie freilegbare Oberflächen (4) auf den Behältern vorsehen, wobei die Oberflächen Identifizierungsmarkierungen für jede Substanz in den Behältern tragen.

6. Anordnung gemäß einem der Ansprüche 1 bis 5, **dadurch gekennzeichnet, dass** die Behälter/Substanzen in jeder sektorförmigen Einheit (16) in Untersektoren (16a, 16b) angeordnet sind, die sich entlang einander erstrecken, und dass einer oder mehrere Behälter/Substanzen für eine erste Gruppe von Farbtönen und in einer oder mehreren der Nutzerkategorien der sektorförmigen Einheiten mit Behältern/Substanzen in einer angrenzenden Gruppe von Farbtönen und Nutzerkategorie koordiniert sind.

7. Anordnung gemäß einem der Ansprüche 1 bis 6, **dadurch gekennzeichnet, dass** die konusförmige oder pyramidenförmige Einheit (1) für die erste Nutzerkategorie angeordnet ist mit
a) einem äußersten Kreis oder erstem Niveau von Behältern/Substanzen, die zum Beispiel vierundachtzig zählen, und zum Beispiel sechzehn Dentinen zugeordnet sind,
b) einer nächstäußersten Reihe oder zweitem Niveau von Behältern/Substanzen mit zum Beispiel sechzehn Mänteln, zum Beispiel sechs Innenkernen (IC) und zum Beispiel vier Chromatierern und
c) einer drittäußersten Reihe oder drittem Niveau, das zum Beispiel acht Opalschmelzen und sechs Standardschneiden, Transpa-Klar und Okklusalweiß umfasst.

8. Anordnung gemäß einem der Ansprüche 1 bis 7, **dadurch gekennzeichnet, dass** die zweite Nutzerkategorie beispielsweise umfasst zweiunddreißig Behälter/Substanzen in unterschiedlichen Reihen und zum Beispiel bestehend aus zehn inneren Modifizierern, zum Beispiel sechs gefärbten Transluzenzen, zum Beispiel vier Perlmutteffekten, zum Beispiel sechs Schulterkeramiken und zum Beispiel sechs Mantelmodifizierern.

9. Anordnung gemäß einem der Ansprüche 1 bis 8, **dadurch gekennzeichnet, dass** die dritte Nutzerkategorie beispielsweise umfasst sechzehn Behälter/Substanzen in einer oder mehreren Reihen auf einem oder mehreren Niveaus und bestehend aus zum Beispiel vierzehn Färbepulvern, zum Beispiel einem Glasurpulver und zum Beispiel einem Korrekturpulver.

10. Anordnung gemäß einem der Ansprüche 1 bis 9, **dadurch gekennzeichnet, dass** die konusförmige oder pyramidenförmige Einheit (1) eine Breite von 400 bis 450 mm, bevorzugt ca. 430 mm, und eine Höhe von 160 bis 220 mm, bevorzugt ca. 190 mm, aufweist.

11. Anordnung gemäß einem der Ansprüche 1 bis 10, **dadurch gekennzeichnet, dass** die konusförmige oder pyramidenförmige Einheit mit einem zentral angeordneten Element (5) versehen ist, dass ein Bild oder Proben (13) von Farbtönen, die in Verknüpfung mit der Einheit verwendet werden, von Substanzen für die Konstruktion und Färbung trägt.

12. Anordnung gemäß Anspruch 11, **dadurch gekennzeichnet, dass** das Element (5) von der konusförmigen oder pyramidenförmigen Einheit (1) entfernt werden kann und das Bild oder die Proben auf seinen Seitenflächen trägt.

13. Anordnung gemäß Anspruch 11 oder 12, **dadurch gekennzeichnet, dass** das Element mit Teleskopteilen eingerichtet ist, die in Bezug auf die konusförmige oder pyramidenförmige Einheit (1) angehoben und abgesenkt werden können.

14. Anordnung gemäß Anspruch 11, 12 oder 13, **dadurch gekennzeichnet, dass** das Element aus Scheiben oder Platten (8, 9) hergestellt ist, die aufeinander angeordnet sind und auf denen die Bildproben oder Identifizierungen angeordnet sind, bevorzugt an den Umfängen der Scheiben oder Platten.

15. Anordnung gemäß Anspruch 14, **dadurch gekennzeichnet, dass** die Scheiben oder Platten sektorförmig sind und dass einer oder mehrere, bevorzugt alle, der sektorförmigen Teile (12a, 12b) von dem Element entfernt und daran befestigt werden können.

16. Anordnung gemäß einem der Ansprüche 11 bis 15, **dadurch gekennzeichnet, dass** die Proben tablettenförmig sind und bevorzugt einen Durchmesser von ca. 6 mm, und eine Dicke von ca. 2 mm aufweisen und dass jede tablettenförmige Probe von dem betreffenden sektorförmigen Teil entfernt und daran befestigt werden kann.

17. Anordnung gemäß einem der Ansprüche 11 bis 16, **dadurch gekennzeichnet, dass** das Element auf einem Lager gedreht werden kann und mit einem Gehäuse zum Abdecken der Proben, zum Beispiel während des Transports und der Lagerung der konusförmigen oder pyramidenförmigen Einheit, versehen ist.

18. Anordnung gemäß einem der Ansprüche 1 bis 17, **dadurch gekennzeichnet, dass** jeder flaschenförmige Behälter im Querschnitt gekrümmte Außenseiten und Innenseiten aufweist, dass die Innenseite einen beträchtlich kleineren Radius als die Außenseite aufweist und dass die Innenseite und ein Verschluss mit der Innenseite einer leicht gekrümmten Hand zusammenwirken können und der Verschluss für den Daumen und Zeigefinger der Hand zugänglich ist und dass der Behälter eine Breite von 35-50 mm, bevorzugt ca. 38 mm in einer ersten Variante und ca. 49 mm in einer zweiten Variante, aufweist und dass der Verschluss einen Durchmesser von 10-20 mm, bevorzugt ca. 15 mm, aufweist.

## Revendications

1. Agencement de flacons (3) en forme de bouteilles contenant diverses substances pour la construction et la coloration de produits dentaires, par exemple, de dents en céramique, **caractérisé en ce que** l'agencement comprend des unités (15, 16) en forme de secteurs et **en ce que** les flacons en forme de bouteilles sont placés dans lesdites unités (15, 16) en forme de secteurs dont chacune comprend des flacons avec des substances appartenant à un groupe de teintes alloué, par exemple Super Brillant, qui est différent d'un autre groupe ou d'autres groupes de teintes, par exemple Valeur Haute, Intensité de Couleur Chaude, **en ce que** les flacons/substances inclus dans chaque groupe respectif sont divisés en catégories d'utilisateurs (17, 18, 19), par exemple Assortiment de Base, Assortiment Professionnel et Assortiment de Maquillants, et **en ce que** les flacons/substances associés à une première utilisation sont placés le plus à l'extérieur dans l'unité en forme de secteur en question, une deuxième catégorie d'utilisateurs est placée à l'intérieur par rapport à la première catégorie d'utilisateurs dans l'unité en forme de secteur, et ainsi de suite.

2. Agencement tel que revendiqué dans la revendication 1, **caractérisé en ce que** les unités en forme de secteurs (15, 16) sont conçues pour former une partie d'une unité (1) en forme de cône ou de pyramide, les flacons les plus à l'extérieurs étant agencés autour de l'unité à un premier niveau, avec des flacons placés à l'intérieur par rapport aux flacons les plus à l'extérieur et agencés autour de l'unité à un deuxième niveau plus haut que le premier niveau, et ainsi de suite.

3. Agencement tel que revendiqué dans la revendication 2, **caractérisé en ce que** chaque unité en forme de secteur (15) est divisée dans sa direction longitudinale en deux parties en forme d'arc ou plus (20, 21, 22) de l'unité qui sont mutuellement rotatives autour d'un axe central (28) dans l'unité (1) en forme de cône ou de pyramide pour que, dans une première position de rotation, les parties en forme d'arc de l'unité composent la forme de secteur et, dans une ou plusieurs autres positions de rotation, les diverses parties en forme d'arc de l'unité adoptent des positions latéralement décalées les unes par rapport aux autres, et **en ce que**, dans les positions latéralement déplacées de premières parties en forme d'arc de l'unité, les autres parties en forme d'arc de l'unité dans toutes les unités en forme de secteurs peuvent tourner ensemble, auquel cas les flacons/substances pour une catégorie d'utilisateurs respective (17, 18, 19) sont agencés de sorte à être rotatifs par rapport aux flacons/substances pour une autre catégorie d'utilisateurs ou d'autres catégories d'utilisateurs.

4. Agencement tel que revendiqué dans la revendication 2, **caractérisé en ce que** l'unité (1) en forme de cône ou de pyramide comprend ou est composée d'un, deux éléments en forme d'anneaux ou plus qui sont conçus pour être rotatifs les uns par rapport aux autres, **en ce que** chaque élément en forme d'anneau est constitué par des parties de secteur en forme d'arc appartenant à une catégorie d'utilisateurs qui est différente de l'autre catégorie d'utilisateurs ou des autres catégories d'utilisateurs, et les flacons/substances pour les différentes catégories d'utilisateurs peuvent être réglées en rotation à partir de diverses directions d'observation en regardant depuis l'unité en forme de cône ou de pyramide.

5. Agencement tel que revendiqué dans l'une quelconque des revendications 1-4, **caractérisé en ce que** les différences de niveaux entre les diverses rangées de flacons agencés autour de l'unité sont conçues pour fournir des surfaces (4) qui peuvent être exposées sur les flacons, surfaces qui portent des marques d'identification pour chaque substance dans les flacons.

6. Agencement tel que revendiqué dans l'une quelconque des revendications 1-5, **caractérisé en ce que** les flacons/substances dans chaque unité (16) en forme de secteur sont agencés en sous-secteurs (16a, 16b) qui s'étendent les uns à côté des autres, et **en ce que** un ou plusieurs flacons/substances pour un premier groupe de teintes et dans une ou plusieurs catégories d'utilisateurs de l'unité en forme de secteur sont coordonnées avec des flacons/substances dans un groupe adjacent de teintes et de catégorie d'utilisateurs.

7. Agencement tel que revendiqué dans l'une quelconque des revendications 1-6, **caractérisé en ce que** l'unité (1) en forme de cône ou de pyramide pour la première catégorie d'utilisateurs est agencée avec
a) un cercle le plus à l'extérieur ou premier niveau de flacons/substances au nombre de quarante huit, par exemple, et alloué à seize dentines par exemple,
b) la rangée la plus à l'extérieur suivante ou deuxième niveau de flacons/substances avec seize fonds protecteurs par exemple, six coeurs intérieurs (IC) par exemple, et quatre chromatiseurs par exemple, et
c) la troisième rangée la plus à l'extérieur ou troisième niveau comprenant huit émail opales par exemple, et six incisals standards, transparent et blanc occlusal.

8. Agencement tel que revendiqué dans l'une quelconque des revendications 1-7, **caractérisé en ce que** la deuxième catégorie d'utilisateurs comprend par exemple trente deux flacons/substances sur différentes rangées et composées par exemple de dix modifiants internes, six translucidités colorées par exemple, quatre effets nacrés par exemple, six céramiques d'épaulement par exemple, et six modifiants de fonds protecteurs par exemple.

9. Agencement tel que revendiqué dans l'une quelconque des revendications 1-8, **caractérisé en ce que** la troisième catégorie d'utilisateurs comprend par exemple, seize flacons/substances sur une ou plusieurs rangées à un niveau ou plus et composée de quatorze poudres maquillantes par exemple, une poudre de glaçure par exemple, et une poudre correctrice par exemple.

10. Agencement tel que revendiqué dans l'une quelconque des revendications 1-9, **caractérisé en ce que** l'unité (1) en forme de cône ou de pyramide a une largeur de 400-450 mm, de préférence d'environ 430 mm, et une hauteur de 160-220 mm, de préférence d'environ 190 mm.

11. Agencement tel que revendiqué dans l'une quelconque des revendications 1-10, **caractérisé en ce que** l'unité (1) en forme de cône ou de pyramide est prévue avec un élément agencé centralement (5) qui soutient un graphique ou des échantillons (13) de teintes, que l'on utilise en association avec l'unité, de substances pour la construction et la coloration.

12. Agencement tel que revendiqué dans la revendication 11, **caractérisé en ce que** l'élément (11) peut être retiré de l'unité (1) en forme de cône ou de pyramide et soutient le graphique ou les échantillons sur ses surfaces latérales.

13. Agencement tel que revendiqué dans la revendication 11 ou 12, **caractérisé en ce que** l'élément est agencé avec des parties télescopiques qui peuvent être soulevées et baissées en relation avec l'unité (1) en forme de cône ou de pyramide.

14. Agencement tel que revendiqué dans la revendication 11, 12 ou 13, **caractérisé en ce que** l'élément est composé de disques ou de plateaux (8, 9) agencés les uns sur les autres et sur lesquels les échantillons graphiques ou identifications sont agencés de préférence en périphérie des disques ou plateaux.

15. Agencement tel que revendiqué dans la revendication 14, **caractérisé en ce que** les disques ou plateaux sont en forme de secteurs et **en ce que** une ou plusieurs parties en forme de secteurs (12a, 12b), de préférence toutes, peuvent être retirées de et fixées à l'élément.

16. Agencement tel que revendiqué dans l'une quelconque des revendications 11-15, **caractérisé en ce que** les échantillons sont en forme de tablettes et ont de préférence un diamètre d'environ 6 mm et une épaisseur d'environ 2 mm, et **en ce que** chaque échantillon en forme de tablette peut être retiré de et fixé à la partie en forme de secteur en question.

17. Agencement tel que revendiqué dans l'une quelconque des revendications 11-16, **caractérisé en ce qu'**on peut faire tourner l'élément sur un socle et il est muni d'un boîtier pour couvrir les échantillons, par exemple pendant le transport et le stockage de l'unité en forme de cône ou de pyramide.

18. Agencement tel que revendiqué dans l'une quelconque des revendications 1-17, **caractérisé en ce que** chaque flacon en forme de bouteille présente, en section transversale, des côtés extérieurs et des côtés intérieurs incurvés, **en ce que** le côté intérieur a un rayon beaucoup plus petit que celui du côté extérieur, et **en ce que** le côté intérieur et un couvercle peuvent coopérer avec le côté intérieur d'une main légèrement courbée, et le pouce et l'index de la main peuvent avoir accès au couvercle, et **en ce que** le flacon a une largeur de 35-50 mm, de préférence d'environ 38 mm dans une première variante, et d'environ 49 mm dans une deuxième variante, et le couvercle a un diamètre de 10-20 mm, de préférence d'environ 15 mm.
